# FASCICULE DE BREVET EUROPEEN

(11) **EP 1 994 367 B1**
(45) Date de publication et mention de la délivrance du brevet: **03.02.2010**
(21) Numéro de dépôt: 07717836.6
(22) Date de dépôt: 09.01.2007
(51) Int. Cl.: G01D 4/00, G08C 17/02

(54) **DISPOSITIF DE TELE-RELEVE BI-DIRECTIONNEL DE COMPTEUR D'EAU PAR RADIO POUR FACTURATION SELON LES HORAIRES DE CONSOMMATION.**
VORRICHTUNG FÜR BIDIREKTIONALE FERNABLESUNG EINES WASSERZÄHLERS MITTELS FUNK ZUR RECHNUNGSSTELLUNG GEMÄSS VERBRAUCHSZEITEN
DEVICE FOR BIDIRECTIONAL REMOTE WATER-METER READING BY MEANS OF RADIO, FOR INVOICING IN ACCORDANCE WITH CONSUMPTION TIME BANDS

(30) Priorité: 10.01.2006 FR 0600194
(43) Date de publication de la demande: 26.11.2008
(73) Titulaire: Suez Environnement, 75008 Paris (FR)
(72) Inventeur: VILLESSOT, Daniel, 75016 Paris (FR); GUERQUIN, Marc, 78590 Noisy Le Roi (FR)
(74) Mandataire: Michardière, Bernard
(86) Numéro de dépôt international: PCT/FR2007/000031
(87) Numéro de publication internationale: WO 2007/080309

(56) Documents cités:
- EP-A- 0 809 374
- WO-A-99/65169
- US-A1- 2002 089 428
- US-B1- 6 853 309

## Description

La présente invention concerne de manière générale les dispositifs de télé-relève de compteur d'eau comprenant un ensemble d'acquisition des données de consommation et comprenant au moins un émetteur radio pour transmettre les informations acquises, au moins un récepteur radio intégré à l'ensemble d'acquisition de manière à rendre ledit dispositif communiquant dans les deux sens pour recevoir les informations d'un central et une antenne pour que ledit central puisse émettre des informations d'horodatage de sorte que cette transmission d'information prise en compte par lesdits récepteurs radio permet de garantir un horodatage exact de tous les ensembles d'acquisition des compteurs formant un même parc.

Un Tel dispositif est décrit dans le document WO 99/65169.

Historiquement, le monde de la télé-relève du comptage d'eau s'est divisé en deux approches :
- la première pour les distributeurs qui avaient un besoin de données précises et horodatées, tant pour le suivi de leurs installations que pour le suivi de quelques grands comptes. Le besoin d'information est alors fréquent, c'est-à-dire quotidien dans la majeure partie des cas, et précis en terme d'horaire. Le coût est souvent d'importance moindre envers le besoin, ce qui a amené ces distributeurs à utiliser des techniques téléphoniques, soit RTC, soit en cas de difficultés à obtenir une ligne téléphonique, GSM et ses dérivés GPRS et SMS,
- la seconde pour le monde des gestionnaires d'immeuble qui souhaitaient obtenir l'ensemble des index de leurs compteurs d'eau à une date précise pour une facturation de charges d'eau. La précision horaire est alors peu importante, mais le coût est un facteur fondamental. Ces gestionnaires d'immeubles et leurs prestataires ont alors été amenés à envisager des communications par mode radio en Walk-by, (c'est-à-dire avec un releveur captant les émissions radio à quelques dizaines de mètres), puis plus récemment en mode poste fixe. On a alors imaginé des récepteurs récupérant les informations des compteurs avoisinant par mode hertzien, soit en mode courte portée via des répéteurs, soit en mode longue portée. Ces récepteurs renvoient alors l'ensemble des informations par les moyens plus onéreux RTC/GSM, mais ce coût est alors réparti sur un ensemble de points de comptage et devient acceptable. Cette solution développée au sein des immeubles s'est étendue ensuite naturellement à la relève de l'ensemble des compteurs clients des gestionnaires d'eau.

Qui plus est, il devenait impossible de garantir une émission à heure fixe pour l'ensemble des transmetteurs. Comme on l'a vu, un récepteur donné doit capter plusieurs dizaines de transmetteurs, mais ce récepteur étant incapable de les capter simultanément, les émissions radio sont souvent faites de façon désynchronisée, voire de façon aléatoire autour d'une fréquence d'émission donnée (par exemple 12 Heures plus ou moins dix minutes) pour un même récepteur.

La scission entre ces deux approches s'est également accentuée par la gestion de l'énergie sur le point de comptage. En effet, à la différence d'autres fluides notamment électricité, on ne dispose pas d'apport énergétique sur les compteurs d'eau.

Dans le cas d'un besoin absolu d'informations avec horodatage, on s'est donc orienté vers des liaisons RTC/ GSM dont les modems sont gourmands en énergie ; on a pallié à ce besoin directement par une liaison secteur, ou à défaut par des batteries importantes dont on acceptait le remplacement fréquemment, par exemple selon des périodes de l'ordre de quelques mois. Ces contraintes ne sont générées que sur quelques grands comptes, donc ont peu d'impact globalement sur l'économie de l'ensemble du service. Mais cette solution une fois adoptée permet de démultiplier les liaisons entre base et serveur de collecte et les points de comptage et ceci dans les deux sens (du point de comptage vers le serveur ou inversement). On procède donc à des mises à l'heure des horloges locales des compteurs ou à des collectes d'index à la fréquence que l'on souhaite.

A l'inverse, le besoin de collecte dans le monde divisionnaires et gestion clientèle restait sur un besoin simple d'un index au mieux mensuel, et une gestion d'énergie sous forme d'une batterie autonome très longue durée de l'ordre de quinze ans. Dans ces conditions, il était impensable d'envisager des communications bi-directionnelles fréquentes, compliquées, ni d'envisager des horodatages précis fréquents. Le maximum de ce qui peut se faire en la matière reste la mémorisation d'un index dit « anniversaire » une à deux fois maximum par an à partir d'une horloge locale horodatée très rarement (voire jamais).

Les besoins de gestion d'un réseau d'eau s'apparentent à ceux très connus d'un réseau d'électricité. La production se fait à partir d'installations de capacités constantes, automatisées, pouvant produire 24H/ 24H. A l'inverse, les clients consomment de façon très ponctuelle dans la journée (matin et soir), engendrant des pics de consommation très importants : on considère dans la profession que le débit maximum de consommation peut avoisiner les 1,8 fois la consommation moyenne de la journée.

Ce décalage entre capacité de production et besoin ponctuel est pallié par les moyens classiques de gestion de stock :
- Les réservoirs d'eau : la profession considère souvent qu'il est irraisonnable de ne pas posséder moins de 12 heures de consommation de capacité de stockage, amenant à créer des réservoirs de capacité de plusieurs milliers de mètres cubes,
- Les Réseaux dimensionnés pour faire transiter les débits de pointe. Ces moyens sont bien sûr source de surcoûts d'investissements et de gestion importants. On est donc amené à chercher des moyens incitant les consommateurs - et de préférence les gros consommateurs - à diminuer leur consommation en période de pointe. Cette recherche est d'autant plus cruciale que des prélèvements à gros débits peuvent amener des baisses de pression conséquentes dans les réseaux d'eau, gênant les usagers souhaitant s'alimenter au même moment. Ce phénomène est d'autant plus important que la consommation globale et les débits à faire transiter sont importants.

Une solution par les communications par modem et liaison RTC/ GSM est certes disponible mais elle présente l'inconvénient d'imposer une gestion distincte des communications avec des protocoles différents. Elle impose également de revenir à des matériels relativement coûteux par rapport à ceux d'une télé-relève en mode hertzien.
Afin de pallier les inconvénients des dispositifs existants, les inventeurs ont mis au point, ce qui fait l'objet de l'invention, un dispositif de télé-relève de compteur d'eau comprenant un ensemble d'acquisition des données de consommation et comprenant au moins un émetteur radio pour transmettre les informations acquises, au moins un récepteur radio intégré à l'ensemble d'acquisition de manière à rendre ledit dispositif communiquant dans les deux sens pour recevoir les informations d'un central et une antenne pour que ledit central puisse émettre des informations d'horodatage de sorte que cette transmission d'information prise en compte par lesdits récepteurs radio permet de garantir un horodatage exact de tous les ensembles d'acquisition des compteurs formant un même parc, qui se caractérise en ce que ledit compteur démarre une mesure de volume consommé à un horaire déterminé par un premier horodatage reçu depuis le central par le récepteur et l'arrête à un horaire déterminé par un second horodatage reçu depuis le central par le récepteur, le volume consommé dans l'intervalle compris entre les deux horodatages étant stocké dans une mémoire puis transmis audit central par l'intermédiaire de l'émetteur à un horaire différé.

Il s'avère en effet aisé dans le mode de fonctionnement du dispositif selon l'invention d'envoyer une information unique et à horaire fixé, tel qu'un horodatage à l'ensemble du parc de compteurs sous gestion depuis le central. Cependant, la remontée des informations depuis l'ensemble des compteurs du parc de compteurs jusqu'au central ne peut se faire de façon concomitante pour tous les compteurs. Il est ainsi préférable de stocker les informations à envoyer dans une mémoire du compteur et de transférer les informations stockées de manière différée à un horaire prédéterminé ou aléatoire au cours duquel la plupart des autres compteurs seront silencieux.

Avantageusement, le dispositif selon l'invention comporte de plus un écran permettant de visualiser l'horaire et la période pendant laquelle s'effectue la consommation.

De préférence, ledit émetteur, ledit récepteur et ledit ensemble d'acquisition sont disposés de telle sorte qu'ils peuvent être intégrés dans un même boîtier, pilotés par une carte électronique commune et alimentés par une même source d'énergie.

Plus préférentiellement, le dispositif de télé-relève selon l'invention comporte de plus au moins un répéteur disposé entre le compteur et central pour reprendre et transférer l'émission radio du compteur au central et réciproquement.

Plus préférentiellement encore, ledit émetteur et ledit récepteur radio fonctionnent tous deux sur fréquences libres.

En variante, au moins le dit émetteur radio ou au moins ledit récepteur radio fonctionne sur une fréquence dédiée.

Dans ce cadre, la puissance dudit émetteur radio ou dudit récepteur radio fonctionnant sur fréquence dédiée est supérieure à la limite maximale autorisée pour les fréquences libres.

Dans un mode particulier de réalisation du dispositif selon l'invention, dans lequel le compteur est un compteur mécanique, équipé d'un transducteur transformant les mouvements mécaniques du compteur en impulsions électriques, ledit ensemble d'acquisition est disposé contre le transducteur dont il est solidarisé, une même source d'énergie assure l'alimentation du transducteur et de l'ensemble et ladite antenne est reliée à l'émetteur et au récepteur au moyen d'un câble, de sorte que l'antenne peut être placée à distance de du compteur.

Plus particulièrement, dans le cas d'un compteur disposé dans un regard, ladite antenne est disposée dans la partie supérieure dudit regard.

Plus particulièrement encore, dans le cas d'un compteur disposé dans un regard muni d'un tampon, ladite antenne est intégrée au tampon dudit regard.

Dans cette réalisation particulière, si le tampon est métallique, ladite antenne est constituée par le tampon du regard.

En variante, si le tampon est en une matière non-conductrice de l'électricité, ladite antenne est encastrée ou moulée dans ledit tampon.

Plus particulièrement dans le cas d'un compteur disposé dans un regard muni d'un tampon, le tampon comporte sur sa face inférieure, un connecteur relié à une extrémité de l'antenne et sur lequel peut être branché le câble radio de liaison à l'émetteur et au récepteur.

Préférentiellement, ledit câble est un câble coaxial.

Avantageusement, ladite source d'énergie est choisie parmi les piles et/ou les batteries.

Le dispositif selon l'invention concerne donc un transmetteur (émetteur et récepteur) radio hertzien bi-directionnel émettant sur le même système radio que les appareils classiques de transmission d'index, et horodatable par liaison hertzienne.

Un tel appareil permet de pouvoir disposer sur un même parc de compteurs télé-relevés, d'une part de transmetteurs classiques de transfert d'informations classiques volumes consommés, débit minimum maximum de consommation, etc, à horaire aléatoire, et d'autre part de transmetteurs horodatés à la fréquence souhaitée et paramétrables depuis le récepteur ou la base de données/ serveur, envoyant des index mémorisés aux dates et heures souhaitées.

Le dispositif selon l'invention confère les avantages principaux de
- permettre la gestion de tarifications par heure, et
- permettre la gestion d'un protocole unique de transmission,
- permettre l'utilisation du réseau de transmission hertzien monté pour les besoins de clients ne nécessitant pas de gestion horodatée des index, donc de diminuer les coûts d'investissements.

Pour cela, les radios de transfert d'information ont été rendues bi-directionnelles. La radio gère alors deux services au-delà de sa fonction classique de transmission d'information :
- la gestion d'un horodatage précis grâce à la transmission depuis le serveur, et
- la transmission vers un afficheur local des consommations par tranche horaire prédéfinie, soit grâce à l'émission radio, soit par tout autre moyen.

De telles fonctionnalités permettent aisément de définir une tarification incitative de l'eau aux heures d'effacement de la consommation pour de gros consommateurs pouvant décaler à la nuit leurs prélèvements comme par exemple, de façon non exhaustive :
- les golfs et leurs arrosages,
- les arrosages municipaux, et
- les piscines recevant du public.

L'invention sera mieux comprise à la lecture de la description détaillée mais non limitative, faite ci-après en référence aux dessins sur lesquels :
- la figure 1 représente un schéma de fonctionnement du dispositif selon la présente invention, et
- la figure 2 représente un dispositif selon la présente invention disposé dans un regard muni d'un tampon métallique faisant office d'antenne.

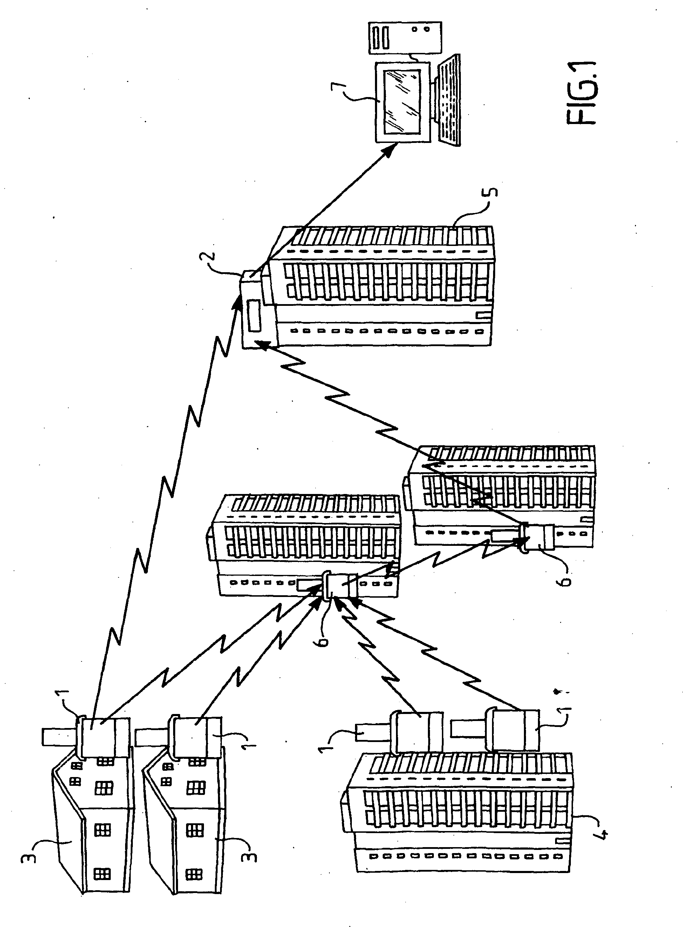

Sur la figure 1 est représenté un schéma de fonctionnement d'un réseau de dispositifs de télé-relève de compteurs d'eau selon la présente invention.

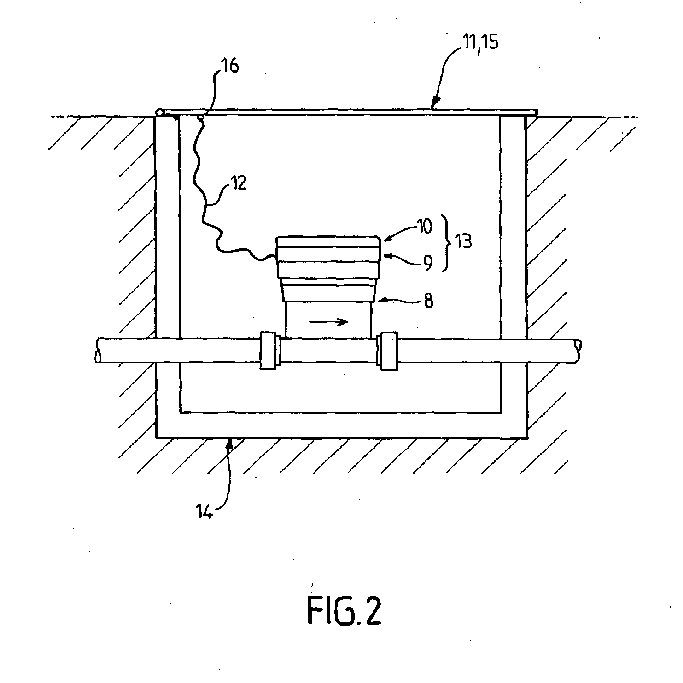

Ces dispositifs 1 (détaillés sur la figure 2 dans un mode de réalisation particulier) sont constitués d'un compteur, notamment un compteur mécanique équipé d'un transducteur placé contre le compteur et transformant les mouvements mécaniques dudit compteur en impulsions électriques, un ensemble d'acquisition des données de consommation sous forme d'impulsions électriques, comprenant au moins un émetteur radio pour transmettre les informations acquises et une antenne.

Ces dispositifs 1 comprennent de plus un récepteur radio intégré à l'ensemble d'acquisition de manière à rendre ledit dispositif communiquant dans les deux sens pour recevoir les informations d'un central 2 et notamment un horodatage.

Sur la figure 1 sont représentés à la fois des dispositifs 1 installés dans des résidences privées 3 de type pavillonnaires et dans des ensemble d'immeubles 4 regroupant les consommations de l'ensemble des habitants.

Il est à noter que pour faciliter la lecture du dessin, les dispositifs 1 et 2 sont représentés à une échelle beaucoup plus grande que les immeubles. Les dimensions des dispositifs 1 ne sont que de l'ordre de la dizaine de centimètres.

Les dispositifs 1 peuvent communiquer soit directement avec le central 2, par exemple disposé au sommet d'un immeuble 5 situé au coeur du parc de dispositifs implantés, ou encore, dans le cas d'un champ peu ouvert et fortement urbanisé, avec des répéteurs 6 disposés à intervalles réguliers entre les dispositifs 1 et le central 2 de manière à contrebalancer la perte dû aux obstacles, les répéteurs transmettant à leur tour les informations reçues vers le central 2 ou vers le dispositif 1 selon le sens de l'information.

Il est ainsi possible de fonctionner tout aussi bien avec des fréquences libres, notamment lorsque l'utilisation de répéteurs 6 est nécessaire ou avec des fréquences dédiées notamment dans le cas d'un champ ouvert. L'intérêt d'utiliser une fréquence dédiée est de pouvoir augmenter la puissance d'émission et donc la distance utile entre l'émetteur du dispositif 1 et le récepteur 2 ou 6. Dans le cas des fréquences libres, en particulier en milieu urbain, la portée d'un tel dispositif n'est que de quelques dizaines de mètres alors qu'elle atteint 500 mètres à 1 kilomètres avec une fréquence dédiée. En champ ouvert, c'est à dire faiblement urbanisé, la portée du dispositif en fréquence dédiée peut atteindre plusieurs kilomètres. On peut donc ainsi réduire le nombre de répéteurs, voire les supprimer. Ces répéteurs 6 sont placés pour reprendre et transmettre les informations reçues depuis le dispositif 1 jusqu'à un central d'acquisition 2. En augmentant la portée des émetteurs, on peut donc diminuer leur utilité et ainsi diminuer le coût d'une installation.

En fin de parcours, les informations collectées par le central sont transférées vers une base de données 7 d'où des informations et notamment un horodatage peuvent être envoyées dans le sens inverses.

La figure 2 illustre un exemple particulier de réalisation du dispositif selon l'invention.

Celui-ci est un dispositif de télé-relève de compteur d'eau comprenant un compteur mécanique 8, un transducteur 9 placé contre le compteur 8 et transformant les mouvements mécaniques dudit compteur 8 en impulsions électriques, un ensemble d'acquisition des impulsions électriques 10 comprenant un émetteur radio pour transmettre les informations acquises et un récepteur radio intégré à l'ensemble d'acquisition 10 de manière à rendre ledit dispositif communiquant dans les deux sens pour recevoir les informations d'un central et notamment un horodatage.

Ce dispositif est également muni d'une antenne 11.

Cette antenne 11 est placée à distance du compteur et est reliée à l'ensemble radio (émetteur et récepteur) au moyen d'un câble 12.

Dans l'exemple représenté, ledit ensemble d'acquisition 10 et le transducteur 9 sont, de plus, disposés de sorte à pouvoir être intégrés dans le même bloc ou boîtier 13 et sont pilotés par une carte électronique commune et une même source d'énergie unique assure l'alimentation du transducteur 9 et de l'ensemble d'acquisition 10.

Ainsi, le transfert des impulsions électriques générées par le transducteur 9 à l'ensemble d'acquisition 10 est donc réalisé de manière directe.

Ce dispositif permet de s'affranchir de la plupart des inconvénients rencontrés dans la transmission des informations par radio, à savoir, le placement de l'antenne, point de départ de l'onde radio à l'endroit le plus approprié pour l'émission et la réception la plus propre possible, ce par le déport unique de l'antenne 11 dont le câble 12 qui la relie à l'ensemble d'acquisition 10 peut être très long. Il permet également des économies importantes en minimisant le coût de réalisation du dispositif et en rendant minimal l'entretien et la consommation. On n'utilise ici qu'une seule est unique source d'énergie, par exemple des piles ou des batteries, et on a recourt qu'à la réalisation d'une seule et unique carte électronique.

En pratique, le câble 12 reliant l'antenne 11 à l'ensemble d'acquisition 10 est un câble coaxial.

En déportant l'antenne 11, on peut ainsi utiliser tout dispositif métallique ou conducteur de l'électricité pour jouer ce rôle. Dans le cas ici représenté, le compteur volumétrique 8 est implanté dans un regard 14 enterré muni d'un tampon 15. Il est donc possible d'utiliser ce tampon 15 en tant qu'antenne 11 en le raccordant par l'intermédiaire du câble 12 à l'ensemble d'acquisition 10. Pour faciliter cette connexion, on peut prévoir un connecteur 16 disposé sur le tampon 14 et sur lequel est branché directement le câble 12 radio de liaison à l'émetteur/récepteur.

Dans le cas ou le tampon 15 est réalisé en une matière non-conductrice de l'électricité, ladite antenne 11 est alors encastrée ou moulée dans ledit tampon 14. De la même manière, on prévoit un connecteur 16 relié à une extrémité de l'antenne 11 et sur lequel peut être branché le câble radio 12 de liaison à l'émetteur/récepteur.

Ce cas de figure n'est pas représenté ici.

Le fait d'utiliser le tampon 15 en tant qu'antenne 11 ou en tant que support d'antenne 11 permet d'avoir un point de départ de l'onde radio situé au niveau du sol et non plus à une certaine distance sous la terre, dans le cas d'un compteur 8 enterré. Cette disposition permet d'améliorer l'efficacité de la communication entre le dispositif et le central ou le répéteur.

De plus, le dispositif permettra une mise en place beaucoup plus aisée.

En effet, le technicien n'aura pas à intervenir dans le regard pour fixer une antenne ou un bloc radio ce qui est parfois délicat du fait de la difficulté d'accessibilité à l'intérieur de celui-ci. Il suffit alors de poser le compteur selon l'invention et de raccorder le câble au tampon dans le cas d'un tampon métallique, éventuellement de remplacer le tampon par un autre où sera disposé un connecteur. Il en est de même pour les regards dont le tampon n'est pas conducteur de l'électricité. Un simple remplacement du tampon permettra un raccordement aisé du compteur à son antenne et une mise en place pratique de l'ensemble du dispositif.

L'invention ainsi décrite est parfaitement adaptée à la distribution d'eau mais la technologie décrite peut parfaitement se transposer à tout autre fluide dont le débit est mesuré mécaniquement, comme par exemple le gaz.

Bien que la description ait été effectuée principalement à propos d'un compteur mécanique, l'invention s'applique à tout type de compteur, notamment électronique.

## Revendications

1. Dispositif (1) de télé-relève de compteur d'eau (8), comprenant un ensemble d'acquisition (10) des données de consommation et comprenant au moins un émetteur radio pour transmettre les informations acquises, au moins un récepteur radio intégré à l'ensemble d'acquisition (10) de manière à rendre ledit dispositif (1) communiquant dans les deux sens pour recevoir les informations d'un central (2) et une antenne (11) pour que ledit central puisse émettre des informations d'horodatage de sorte que cette transmission d'information prise en compte par lesdits récepteurs radio permet de garantir un horodatage exact de tous les ensembles d'acquisition (10) des compteurs formant un même parc, **caractérisé en ce que** ledit compteur (8) démarre une mesure de volume consommé à un horaire déterminé par un premier horodatage reçu depuis le central (2) par le récepteur et l'arrête à un horaire déterminé par un second horodatage reçu depuis le central (2) par le récepteur, le volume consommé dans l'intervalle compris entre les deux horodatages étant stocké dans une mémoire puis transmis audit central (2) par l'intermédiaire de l'émetteur à un horaire différé.

2. Dispositif (1) de télé-relève selon la revendication 1, **caractérisé en ce qu'**il comporte de plus un écran permettant de visualiser l'horaire et la période pendant laquelle s'effectue la consommation.

3. Dispositif (1) de télé-relève selon l'une des revendications 1 ou 2, **caractérisé en ce que** ledit émetteur, ledit récepteur et ledit ensemble d'acquisition (10) sont disposés de telle sorte à pouvoir être intégrés dans un même boîtier (13), pilotés par une carte électronique commune et alimenté par une même source d'énergie.

4. Dispositif (1) de télé-relève selon l'une quelconque des revendications 1 à 3, **caractérisé en ce qu'**il comporte de plus au moins un répéteur (6) disposé entre ledit dispositif (1) et central (2) pour reprendre et transférer l'émission radio du compteur (8) au central (2) et réciproquement.

5. Dispositif (1) de télé-relève selon l'une quelconque des revendications précédentes, **caractérisé en ce que** ledit émetteur et ledit récepteur radio fonctionnent tous deux sur fréquences libres.

6. Dispositif (1) de télé-relève selon l'une quelconque des revendications 1 à 4, **caractérisé en ce que** au moins le dit émetteur radio ou au moins ledit récepteur radio fonctionne sur une fréquence dédiée.

7. Dispositif (1) de télé-relève selon la revendication 6, **caractérisé en ce que** la puissance dudit émetteur radio ou dudit récepteur radio fonctionnant sur fréquence dédiée est supérieure à la limite maximale autorisée pour les fréquences libres.

8. Dispositif (1) de télé-relève selon l'une quelconque des revendications précédentes, dans lequel le compteur est un compteur mécanique, équipe d'un transducteur transformant les mouvements mécaniques du compteur en impulsions électriques, **caractérisé en ce que** ledit ensemble d'acquisition (10) est disposé contre le transducteur (9) dont il est solidarisé, qu'une même source d'énergie assure l'alimentation du transducteur (9) et de l'ensemble (10) et que ladite antenne (11) est reliée à l'émetteur et au récepteur au moyen d'un câble (12), de sorte que l'antenne (11) peut être placée à distance de du compteur (8).

9. Dispositif (1) de télé-relève selon l'une quelconque des revendications précédentes pour compteur (8) disposé dans un regard (14), **caractérisé en ce que** ladite antenne (11) est disposée dans la partie supérieure dudit regard (14).

10. Dispositif (1) de télé-relève selon la revendication 9 pour compteur (8) disposé dans un regard (14) muni d'un tampon (15), **caractérisé en ce que** ladite antenne (11) est intégrée au tampon (15) dudit regard (14).

11. Dispositif (1) de télé-relève selon la revendication 10, **caractérisé en ce que** le tampon (15) est métallique et ladite antenne (11) est constituée par le tampon (15) du regard (14).

12. Dispositif (1) de télé-relève selon la revendication 10, **caractérisé en ce que** le tampon (15) est en une matière non-conductrice de l'électricité et ladite antenne (11) est encastrée ou moulée dans ledit tampon (15).

13. Dispositif (11) de télé-relève selon l'une quelconque des revendications 10 à 12, **caractérisé en ce que** le tampon (15) comporte, sur sa face inférieure, un connecteur (16) relié à une extrémité de l'antenne (11) et sur lequel peut être branché le câble (13) radio de liaison à l'émetteur et au récepteur.

14. Dispositif (1) de télé-relève selon l'une quelconque des revendications 8 à 13, **caractérisé en ce que** ledit câble (12) est un câble coaxial.

15. Dispositif (1) de télé-relève selon l'une quelconque des revendications 3 à 14, **caractérisé en ce que** ladite source d'énergie est choisie parmi les piles et/ou les batteries.

## Claims

1. A remote water meter (8) reading device (1), comprising a consumption data acquisition assembly (10) and comprising at least one radio emitter for transmitting the information acquired, at least one radio receiver integrated into the acquisition assembly (10) in such a way as to render said device (1) communicating in both directions so as to receive the information from a central facility (2) and an antenna (11) so that said central facility can send time-stamping information so that this information transmission taken into account by said radio receivers makes it possible to guarantee exact time-stamping of all the acquisition assemblies (10) for the meters forming one and the same population, **characterized in that** said meter (8) starts a measurement of volume consumed on a schedule determined by a first time-stamping received from the central facility (2) by the receiver and stops it on a schedule determined by a second time-stamping received from the central facility (2) by the receiver, the volume consumed in the interval between the two time-stampings being stored in a memory then transmitted to said central facility (2) by way of the emitter at a deferred schedule.

2. The remote reading device (1) as claimed in claim 1, **characterized in that** it additionally comprises a screen making it possible to view the schedule and the period during which the consumption takes place.

3. The remote reading device (1) as claimed in one of claims 1 or 2, **characterized in that** said emitter, said receiver and said acquisition assembly (10) are disposed in such a way as to be able to be integrated into one and the same package (13) and driven by a common electronic card and powered by one and the same energy source.

4. The remote reading device (1) as claimed in any one of claims 1 to 3, **characterized in that** it additionally comprises at least one repeater (6) disposed between said device (1) and central facility (2) so as to take up and transfer the radio emission from the meter (8) to the central facility (2) and vice versa.

5. The remote reading device (1) as claimed in any one of the preceding claims, **characterized in that** said radio emitter and said radio receiver both operate on free frequencies.

6. The remote reading device (1) as claimed in any one of claims 1 to 4, **characterized in that** at least said radio emitter or at least said radio receiver operates on a dedicated frequency.

7. The remote reading device (1) as claimed in claim 6, **characterized in that** the power of said radio emitter or of said radio receiver operating on a dedicated frequency is greater than the maximum limit permitted for the free frequencies.

8. The remote reading device (1) as claimed in any one of the preceding claims, in which the meter is a mechanical meter, equipped with a transducer transforming the mechanical movements of the meter into electrical pulses, **characterized in that** said acquisition assembly (10) is disposed against the transducer (9) to which it is secured, that one and the same energy source powers the transducer (9) and the assembly (10) and that said antenna (11) is linked to the emitter and to the receiver by means of a cable (12), so that the antenna (11) can be placed some distance from the meter (8).

9. The remote reading device (1) as claimed in any one of the preceding claims for meter (8) disposed in a manhole (14), **characterized in that** said antenna (11) is disposed in the upper part of said manhole (14).

10. The remote reading device (1) as claimed in claim 9 for meter (8) disposed in a manhole (14) furnished with a cover (15), **characterized in that** said antenna (11) is integrated into the cover (15) of said manhole (14).

11. The remote reading device (1) as claimed in claim 10, **characterized in that** the cover (15) is metallic and said antenna (11) consists of the cover (15) of the manhole (14).

12. The remote reading device (1) as claimed in claim 10, **characterized in that** the cover (15) is made of an electrically non-conducting material and said antenna (11) is embedded or molded in said cover (15).

13. The remote reading device (11) as claimed in any one of claims 10 to 12, **characterized in that** the cover (15) comprises, on its lower face, a connector (16) which is linked to an end of the antenna (11) and into which can be plugged the radio cable (13) link to the emitter and to the receiver.

14. The remote reading device (1) as claimed in any one of claims 8 to 13, **characterized in that** said cable (12) is a coaxial cable.

15. The remote reading device (1) as claimed in any one of claims 3 to 14, **characterized in that** said energy source is chosen from among cells and/or batteries.

## Patentansprüche

1. Vorrichtung (1) zur Fernabfrage eines Wasserzählers (8), mit einer Verbrauchsdatenerfassungseinheit (10) und mit mindestens einem Funksender zum Übertragen der erfassten Informationen, mindestens einem Funkempfänger, welcher in der Erfassungseinheit (10) integriert ist, so dass die Vorrichtung (1) in beide Richtungen kommunikationsfähig ist, um Informationen von einer Zentrale (2) zu empfangen, und einer Antenne (11), so dass die Zentrale Zeitstempelinformationen senden kann, damit diese von den Funkempfängern erfasste Informationsübertragung ermöglicht, eine exakte Zeitstempelung aller Erfassungseinheiten (10) der dem selben Bestand angehörenden Zähler zu gewährleisten, **dadurch gekennzeichnet, dass** der Zähler (8) die Messung des verbrauchten Volumens zu einem Zeitpunkt beginnt, der durch einen seitens des Empfängers von der Zentrale (2) empfangenen ersten Zeitstempel bestimmt ist, und die Messung zu einem Zeitpunkt beendet, der durch einen seitens des Empfängers von der Zentrale (2) empfangenen zweiten Zeitstempel bestimmt ist, wobei das in dem Intervall zwischen den beiden Zeitstempeln verbrauchte Volumen in einem Speicher gespeichert und anschließend zu einem anderen Zeitpunkt über den Sender an die Zentrale (2) übermittelt wird.

2. Fernabfragevorrichtung (1) nach Anspruch 1, **dadurch gekennzeichnet, dass** sie ferner einen Schirm aufweist, der die Visualisierung des Zeitpunkts und des Zeitraums, während welchem der Verbrauch erfolgt, ermöglicht.

3. Fernabfragevorrichtung (1) nach einem der Ansprüche 1 oder 2, **dadurch gekennzeichnet, dass** der Sender, der Empfänger und die Abfrageeinheit (10) derart angeordnet sind, dass sie in dem gleichen Gehäuse (13) integriert, von einer gemeinsamen Elektronikkarte gesteuert und von der gleichen Energiequelle versorgt werden können.

4. Fernabfragevorrichtung (1) nach einem der Ansprüche 1 bis 3, **dadurch gekennzeichnet, dass** sie ferner einen zwischen der Vorrichtung (1) und der Zentrale (2) angeordneten Verstärker (6) aufweist, um das Funksignal aufzunehmen und von dem Zähler (8) an die Zentrale (2) weiterzuleiten und umgekehrt.

5. Fernabfragevorrichtung (1) nach einem der vorhergehenden Ansprüche, **dadurch gekennzeichnet, dass** der Funksender und der Funkempfänger beide auf freien Frequenzen arbeiten.

6. Fernabfragevorrichtung (1) nach einem der Ansprüche 1 bis 4, **dadurch gekennzeichnet, dass** zumindest der Funksender oder zumindest der Funkempfänger auf einer gewidmeten Frequenz arbeitet.

7. Fernabfragevorrichtung (1) nach Anspruch 6, **dadurch gekennzeichnet, dass** die Leistung des Funksenders oder des Funkempfängers, die auf einer gewidmeten Frequenz arbeiten, höher als die für freie Frequenzen zulässige Höchstgrenze ist.

8. Fernabfragevorrichtung (1) nach einem der vorhergehenden Ansprüche, bei welcher der Zähler ein mechanischer Zähler ist, der mit einem Wandler versehen ist, welcher die mechanischen Bewegungen des Zählers in elektrische Impulse umwandelt, **dadurch gekennzeichnet, dass** die Erfassungseinheit (10) an dem Wandler (9) angeordnet ist, mit dem sie verbunden ist, dass die gleiche Energiequelle die Versorgung des Wandlers (9) und der Einheit (10) gewährleistet, und dass die Antenne (11) mit dem Sender und dem Empfänger mittels eines Kabels (12) derart verbunden ist, dass die Antenne (11) von dem Zähler (8) entfernt platziert werden kann.

9. Fernabfragevorrichtung (1) nach einem der vorhergehenden Ansprüche für einen in einem Schacht (14) angeordneten Zähler (8), **dadurch gekennzeichnet, dass** die Antenne (11) im oberen Teil des Schachts (14) angeordnet ist.

10. Fernabfragevorrichtung (1) nach Anspruch 9 für einen Zähler (8), der in einem mit einem Verschluss (15) versehenen Schacht (14) angeordnet ist, **dadurch gekennzeichnet, dass** die Antenne (11) in dem Verschluss (15) des Schachts (14) integriert ist.

11. Fernabfragevorrichtung (1) nach Anspruch 10, **dadurch gekennzeichnet, dass** der Verschluss (15) metallisch ist und die Antenne (11) durch den Verschluss (15) des Schachts (14) gebildet ist.

12. Fernabfragevorrichtung (1) nach Anspruch 10, **dadurch gekennzeichnet, dass** der Verschluss (15) aus einem nicht elektrisch leitfähigen Material besteht und die Antenne (11) in den Verschluss (15) eingebettet oder eingegossen ist.

13. Fernabfragevorrichtung (1) nach einem der Ansprüche 10 bis 12, **dadurch gekennzeichnet, dass** der Verschluss (15) auf der Unterseite einen Verbinder (16) aufweist, welcher mit einem Ende der Antenne (11) verbunden ist und an welchen das Funkverbindungskabel (13) zum Sender und zum Empfänger anschließbar ist.

14. Fernabfragevorrichtung (1) nach einem der Ansprüche 8 bis 13, **dadurch gekennzeichnet, dass** das Kabel (12) ein Koaxialkabel ist.

15. Fernabfragevorrichtung (1) nach einem der Ansprüche 3 bis 14, **dadurch gekennzeichnet, dass** die Energiequelle unter Batterien und/oder Akkumulatoren ausgewählt ist.
